# EUROPEAN PATENT APPLICATION

(11) **EP 4 477 468 A1**
(43) Date of publication of application: **18.12.2024**
(21) Application number: 23842232.3
(22) Date of filing: 14.07.2023
(51) Int. Cl.: B60N 3/06, B62D 25/20, B60N 2/62, B60N 2/90

(54) **LEG REST MOUNTING STRUCTURE, AND VEHICLE**

(30) Priority: 20.07.2022 CN 202210855837; 20.07.2022 CN 202210856518; 20.07.2022 CN 202210855789; 20.07.2022 CN 202210855754
(71) Applicant: Voyah Automobile Technology Company Ltd., Hanyang District Wuhan City, Hubei 430050 (CN)
(72) Inventor: WANG, Shuangqun, Wuhan, Hubei 430050 (CN); YUAN, Dong, Wuhan, Hubei 430050 (CN); HOU, Chunsheng, Wuhan, Hubei 430050 (CN); XU, Ming, Wuhan, Hubei 430050 (CN); HUANG, Bo, Wuhan, Hubei 430050 (CN); WANG, Yongheng, Wuhan, Hubei 430050 (CN); LIU, Lin, Wuhan, Hubei 430050 (CN); YANG, Mei, Wuhan, Hubei 430050 (CN); ZHAI, Huan, Wuhan, Hubei 430050 (CN); LI, Jian, Wuhan, Hubei 430050 (CN)
(74) Representative: Valet Patent Services Limited
(86) International application number: PCT/CN2023/107533
(87) International publication number: WO 2024/017169

(57) **Abstract**

A leg-support installation structure and a vehicle. The leg-support installation structure (2) includes a crossbeam (30) for supporting a seat, the crossbeam (30) being provided with a leg-support accommodation space (10) for installing the leg support (1). The leg-support accommodation space (10) is located in an installation space for the crossbeam (30), such that the leg support (1) can be installed inside a vehicle body, thereby preventing the leg support (1) from encroaching on a legroom for passengers.

## Description

### CROSS-REFERENCE TO RELATED APPLICATIONS

This application claims priorities to Chinese patent application Nos. 202210856518.X, 202210855837.9, 202210855754.X and 202210855789.3 filed on July 20, 2022. The disclosures of the aforementioned applications are hereby incorporated by reference in their entireties.

### TECHNICAL FIELD

The application relates to the technical field of automobile seats, and in particular to a leg-support installation structure and a vehicle.

### BACKGROUND

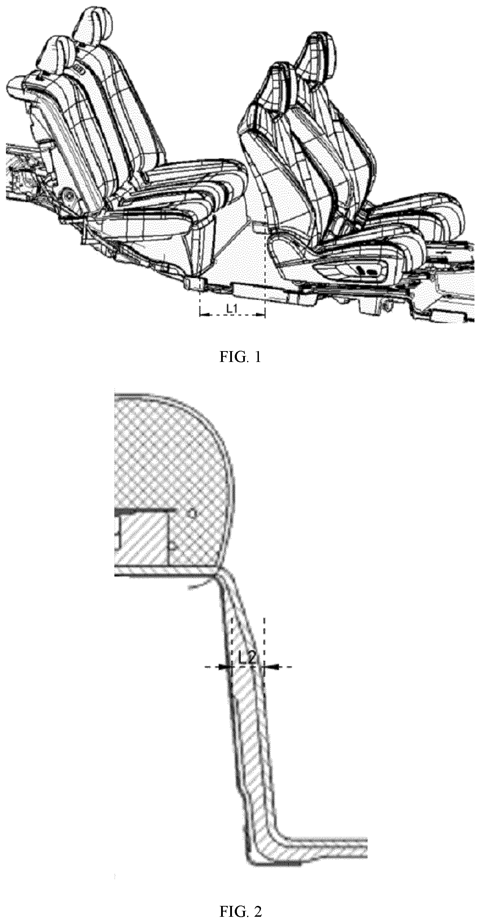

A leg support of a vehicle ha a too great longitudinal thickness when stowed. In order to maintain aesthetics, it is usually required to thicken a longitudinal thickness of a carpet (please refer to L2 in FIG. 2) under left and middle positions of a same row of seats to adapt to the longitudinal thickness of the leg support, and a thickening amount of the carpet is approximately equal to the longitudinal thickness of the leg support. The carpet is generally filled by a foam material to increase a vertical thickness of the carpet. The foam materials are expensive, so a whole cost of a vehicle is increased. Since the leg support and thickened carpet occupy a longitudinal space, a legroom for passengers in this row of seats (please refer to L1 in FIG. 1) is greatly compressed, thereby reducing a riding comfortability.

### SUMMARY

The application provides a leg-support installation structure and a vehicle to solve technical problems in the related art that a cost is increased and a legroom for passengers is compressed due to a thickening of a carpet at a leg support of a vehicle seat.

According to a first aspect of the application, a leg-support installation structure is provided, which includes a crossbeam for supporting a seat, wherein the crossbeam is provided with a leg-support accommodation space for mounting a leg support.

According to a second aspect of the application, a vehicle is provided, which includes a leg support and the above-mentioned leg-support installation structure; the leg support is connected to the leg-support installation structure, is located in the leg-support accommodation space and does not protrude from the crossbeam when in a stowed state; or the vehicle includes a profiling member and the above-mentioned leg-support installation structure, and the profiling member is installed in the leg-support accommodation space.

### BRIEF DESCRIPTION OF DRAWINGS

In order to more clearly illustrate the technical solutions in the embodiments of the application, the accompanying drawings required for use in the description of the embodiments will be briefly introduced in the following. Obviously, the accompanying drawings described below are some embodiments of the application. For those skilled in the art, other accompanying drawings can be obtained based on these drawings without creative work.
FIG. 1 is a schematic diagram showing a passenger legroom at a rear seat in the related art;
FIG. 2 is a schematic diagram showing a thicken longitudinal thickness of a carpet at the rear seat in the related art;
FIG.3 is a first structural diagram of a leg-support installation structure according to one or more embodiments of the application;
FIG. 4 is a schematic structural diagram of the leg-support installation structure shown in FIG. 3 when a leg support is installed and in a stowed state;
FIG. 5 is an exploded view of the leg-support installation structure of FIG. 3;
FIG. 6 is an exploded view of a leg-support bracing assembly in the leg-support installation structure of FIG. 5;
FIG. 7 is an exploded view of a rear-floor front-crossbeam lower plate assembly in the leg-support installation structure of FIG. 5;
FIG.8 is a schematic diagram of a transmission path of a lateral force of a leg-support installation structure according to one or more embodiments of the application;
FIG. 9 is a first structural schematic diagram of a low-end model rear-floor assembly without a leg support in the related art;
FIG. 10 is an exploded view of a leg support in a vehicle according to one or more embodiments of the application;
FIG. 11 is a second structural diagram of a leg-support installation structure according to one or more embodiments of the application;
FIG. 12 is a schematic structural diagram of the leg-support installation structure shown in FIG. 11 when the leg support is installed and in a stowed state;
FIG. 13 is an exploded view of the leg-support installation structure of FIG. 11;
FIG. 14 is an exploded view of a rear-floor assembly in the leg-support installation structure of FIG. 13;
FIG. 15 is an exploded view of a leg-support bracing assembly in the leg-support installation structure of FIG. 13;
FIG. 16 is a top view of the leg-support bracing assembly shown in FIG. 15;
FIG. 17A is a cross-sectional view taken along C-C of FIG. 16;
FIG. 17B is a cross-sectional view taken along D-D of FIG. 16;
FIG. 17C is a cross-sectional view taken along E-E of FIG. 16;
FIG. 18 is a schematic structural diagram of a rear-floor assembly in the leg-support installation structure shown in FIG. 13;
FIG. 19A is a cross-sectional view taken along H-H of FIG. 18;
FIG. 19B is a cross-sectional view taken along J-J of FIG. 18;
FIG. 20 is a second structural schematic diagram of a low-end model rear-floor assembly without a leg support in the related art;
FIG.21 is a second structural diagram of a leg-support installation structure according to one or more embodiments of the application;
FIG. 22 is a schematic structural diagram of the leg-support installation structure shown in FIG. 21 when the leg support is installed and in a stowed state;
FIG. 23 is an exploded view of the leg-support installation structure of FIG. 21;
FIG. 24 is a schematic structural diagram of a rear floor in the leg-support installation structure shown in FIG. 21;
FIG. 25 is an exploded view of a leg-support bracing assembly in the leg-support installation structure of FIG. 21;
FIG. 26 is a schematic structural diagram of a rear-floor front-crossbeam upper plate in the leg-support installation structure of FIG. 21;
FIG. 27 is a schematic structural diagram a rear-floor front-crossbeam lower plate in the leg-support installation structure shown in FIG. 21;
FIG.29 is a fourth structural diagram of a leg-support installation structure according to one or more embodiments of the application;

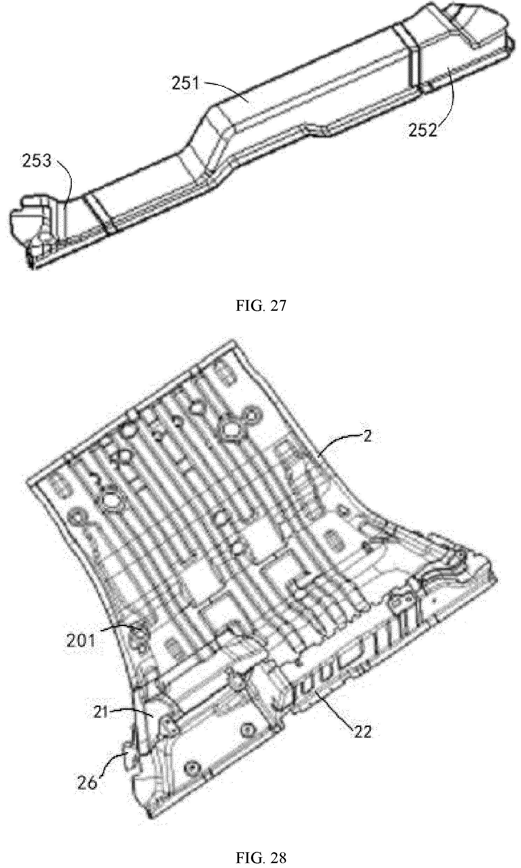

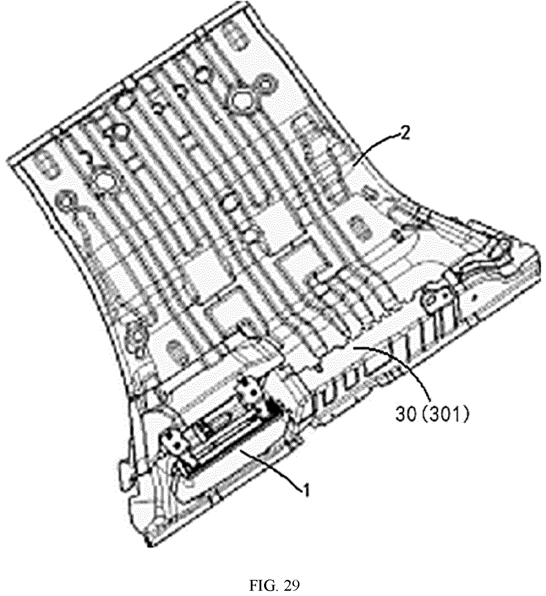

FIG. 29 is a schematic structural diagram of the leg-support installation structure shown in FIG. 28 when a leg support is installed and in a stowed state;

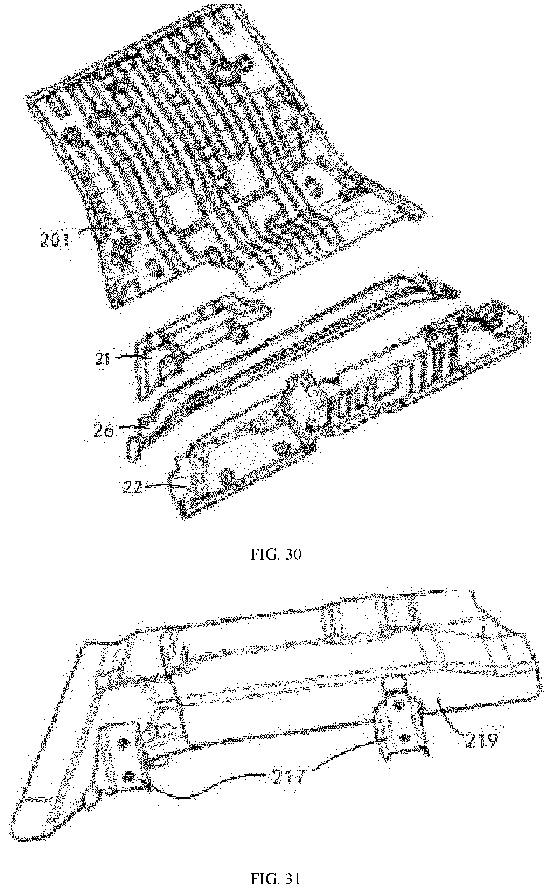

FIG. 30 is an exploded view of the leg-support installation structure of FIG. 28;
FIG. 31 is a schematic structural diagram of a leg-support bracing assembly in the leg-support installation structure of FIG. 28;

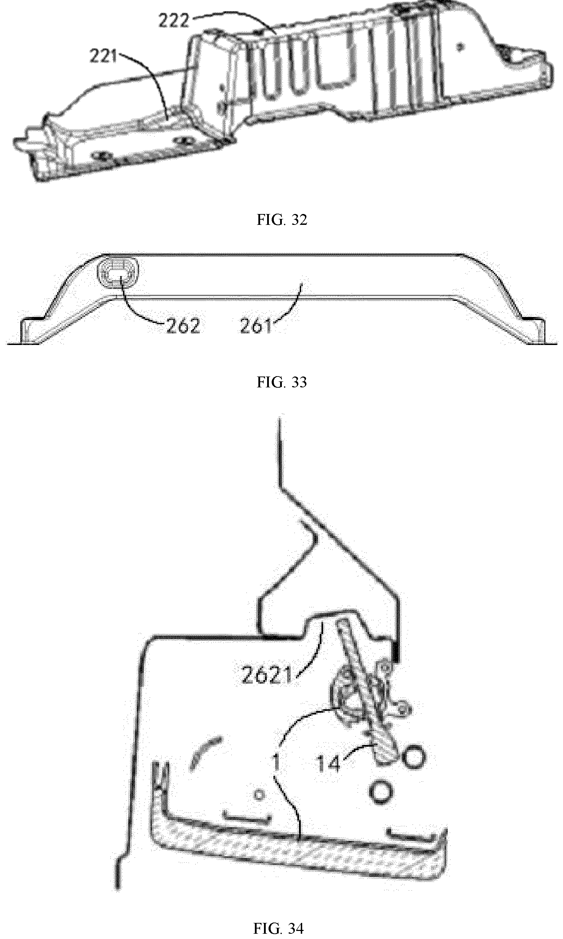

FIG. 32 is a schematic structural diagram of a rear-floor front-crossbeam upper plate assembly in the leg-support installation structure of FIG. 28;
FIG. 33 is a schematic structural diagram of a rear-floor middle-crossbeam assembly in the leg-support installation structure of FIG. 28; and
FIG. 34 is a schematic diagram of an assembly structure of the rear-floor middle-crossbeam assembly and a motor screw of the leg support in the leg-support installation structure shown in FIG. 28.

Reference numerals: 1, leg support; 12 pre-hook; 13, leg-support installation beam, 14, motor screw; 2, leg-support installation structure; 3, profiling member. 10, leg-support accommodation space. 20, rear-floor assembly; 201, rear floor; 202, rear-floor first patch plate; 203, rear-floor second patch plate. 21, leg-support bracing assembly; 211, leg-support reinforcement beam; 2111, avoidance hole; 2112, leg-support pre-hanging visual hole; 2113, leg-support installation positioning indication boss; 212, leg-support reinforcement-beam left blocking plate; 213, leg-support reinforcement-beam right blocking plate; 2141, leg-support reinforcement-beam front blocking plate, 2142, leg-support bracing-plate front blocking plate; 215, leg-support bracing-plate side blocking plate; 216, leg-support bracing plate; 217, leg-support installation plate; 2171, mounting hole; 2172, two side flangings; 2173, U-shaped opening; 218, leg-support cover plate; 2181, mounting point; 219, reinforcement plate. 22, rear-floor front-crossbeam upper plate assembly; 221, portion with leg-support; 222, portion without leg-support. 23, rear-floor front-crossbeam lower plate assembly, 231, rear-floor front-crossbeam first lower plate; 232, rear-floor front-crossbeam second lower plate. 24, rear-floor front-crossbeam upper plate, 241, top portion, 2411, welding clamp through hole, 242, vertical portion. 25, rear-floor front-crossbeam lower plate, 251, rear-floor front-crossbeam lower-plate body, 252, rear-floor front-crossbeam lower-plate left connecting plate; 253, rear-floor front-crossbeam lower-plate right connecting plate. 26, rear-floor middle-crossbeam assembly; 261, rear-floor middle crossbeam; 262, blocking plate, 2621, avoidance groove. 30, crossbeam; 301, rear-floor front crossbeam.

### DESCRIPTION OF EMBODIMENTS

The technical solutions in embodiments of the application will be described clearly and completely below in conjunction with the accompanying drawings in the embodiments of the application. Obviously, the described embodiments are only some embodiments of the application, rather than all embodiments of the application. Based on the embodiments of the application, all other embodiments obtained by those skilled in the art without making any creative work shall fall within the scope sought by the application.

Furthermore, the reference numerals and/or reference letters in different embodiments may be may repeated in the application. Such repetition is for the purpose of simplicity and clarity and does not in itself indicate a relationship between the various embodiments and/or arrangements discussed. Furthermore, the application provides examples of various specific processes and materials, but those skilled in the art may recognize the application of other processes and/or the use of other materials.

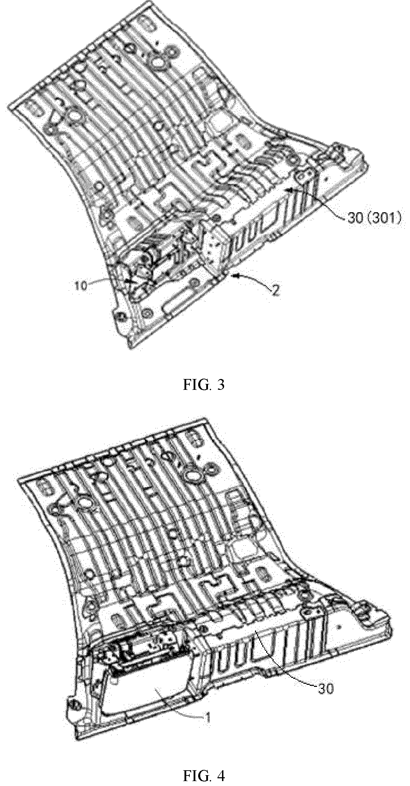

Referring to FIG. 3, FIG. 4, FIG. 11, FIG. 12, FIG. 21 and FIG. 29, a leg-support installation structure 2 is provided according to a first aspect of the application. The leg-support installation structure 2 includes a crossbeam 30 for supporting a seat. The crossbeam 30 is provided with a leg-support accommodation space 10 for installing a leg support 1. The leg-support accommodation space 10 may be provided at a side of the crossbeam 30, or may be provided at two ends of the crossbeam 30. That is to say, the leg-support accommodation space 10 occupies a portion of installation space for the crossbeam 30. The leg-support accommodation space 10 may be configured to accommodate a leg support or a profiling member 3 similar to the leg support in appearance. The leg support / profiling member 3 and the crossbeam 30 together play a role of supporting the seat.

The leg-support accommodation space 10 may include a vacancy obtained by hollowing out a side of the crossbeam 30, that is, the vacancy forms at least a portion of the leg-support accommodation space 10. The leg-support accommodation space 10 may be a space formed by lowering a height of an end of the crossbeam 30, i.e., the space forms at least a portion of the leg-support accommodation space 10. The leg-support accommodation space 10 may also be a space formed by shortening an axial length of the crossbeam 30 (that is, a width direction of a vehicle body of a vehicle, also called a Y direction), such that the shortened crossbeam 30 only occupies a portion of a space originally configured to install the crossbeam 30, and the space not occupied by the crossbeam 30 forms at least a portion of the leg-support accommodation space 10. When a volume of the crossbeam 30 is large enough to meet an installation requirement of space for the leg support 1, and thus the leg-support accommodation space 10 is completely located within an installation space for the crossbeam 30. If a volume of the crossbeam 30 is small, the leg-support accommodation space 10 needs to be formed by the crossbeam 30 and a floor connected to the crossbeam 30 together.

In the leg-support installation structure 2 according to one or more embodiments of the application, since the leg-support accommodation space 10 is located in an installation space at an side of the crossbeam 30, the leg support 1 may be installed internally in a vehicle body. The leg-support installation structure 2 according to one or more embodiments of the application, compared with a leg support in the related art which is installed at a front side of a crossbeam, can at least to some extent solve technical problems in the related art of an increased cost and a compressed legroom for passengers due to a thicken carpet at the leg support of a vehicle seat.

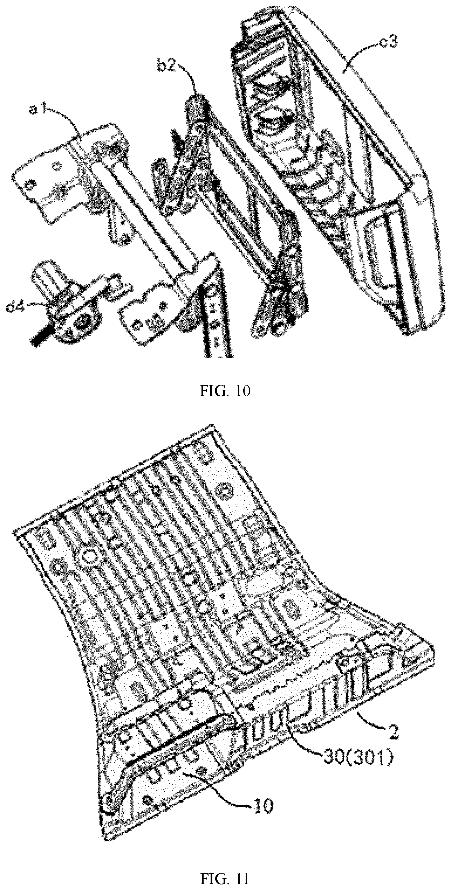

Regarding the leg support 1, a specific structure of the leg support 1 is not limited by the application, and reference may be made to the relevant disclosure of the related art. Referring to FIG. 10 which is an exploded view of a leg support. The leg support 1 includes four portions in total, which are a fixing frame a1, a driving motor d4 , a motion mechanism b2 and a decorative component c3. The fixing frame a1 serves as an installation base for the motion mechanism b2, and the driving motor d4 drives the decorative component c3 to flip through the motion mechanism b2. When the leg support 1 is in an extended state, the decorative component c3 is flipped to a horizontal state or has a certain angle with a horizontal plane to bear legs of passengers.

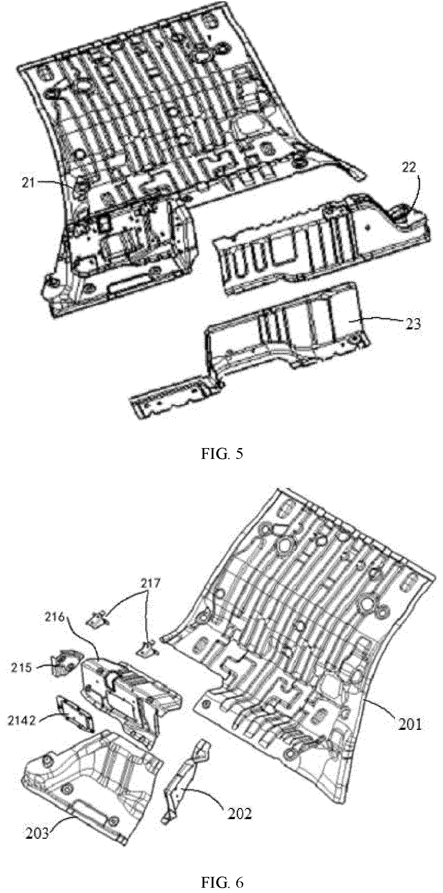

Referring to FIG. 3, in some embodiments, the leg-support installation structure 2 includes a leg-support bracing assembly 21 and a rear-floor front crossbeam 301 fixedly connected to the leg-support bracing assembly 21. The rear-floor front crossbeam 301 is bent to enclose a hollowed-out leg-support accommodation space 10 at a front side of the leg-support bracing assembly 21 and a left or right side of the rear-floor front crossbeam 301. Referring to FIG. 3 and FIG. 4, the leg-support installation structure 2 is intended to form the hollowed-out leg-support accommodation space 10. As shown in FIG. 5, the rear-floor front-crossbeam upper plate assembly 22 and the rear-floor front-crossbeam lower plate assembly 23 are combined to form the rear-floor front crossbeam 301. When the leg support 1 is disposed at a right side of a rear seat, the rear-floor front crossbeam 301 is bent, that is, a portion of the rear seat front crossbeam 301 corresponding to a position where the leg support 1 is disposed is moved backward and a floor is concaved, such that the front side of the leg-support bracing assembly 21 and the right side of the rear-floor front crossbeam 301 are enclosed to form the hollowed-out leg-support accommodation space 10 at the right side of the rear seat front crossbeam 301. When the leg support 1 is disposed at the left side of the rear-floor front crossbeam 301, the front side of the leg-support bracing assembly 21 and the left side of the rear-floor front crossbeam 301 enclose to form the hollowed-out leg-support accommodation space 10.

The hollowed-out leg-support accommodation space 10 provides a space for stowing the leg support 1, thereby avoiding thickening a carpet longitudinally for the sake of aesthetics, reducing an amount of usage of relatively expensive carpet materials and reducing an entire cost for manufacturing the vehicle, increasing the legroom for rear passengers and improving a riding comfortability. In the leg-support installation structure 2 provided by the application, only the leg-support accommodation space 10 is differentially designed, while other portions of the leg-support installation structure 2 are in a conventional design, thereby maximizing a versatility of the leg-support installation structure 2 in a low-end model vehicle and a high-end model vehicle.

Referring to FIG. 3 and FIG. 4, in one or more embodiments, a shape of the rear-floor front crossbeam 301 is changed from straight to curved, that is, a portion of the rear-floor front crossbeam 301 corresponding to the position where the leg support 1 is disposed is moved backward, and the floor is concaved to make room for the leg support 1. The following takes providing a leg support 1 at the right side of the rear seat as an example for illustrating, and a design principle of providing a leg support 1 at the left side of the rear seat is the same.

Referring to FIG. 5, in one or more embodiments, the leg-support installation structure 2 includes a rear-floor front-crossbeam upper plate assembly 22, a leg-support bracing assembly 21 and a rear-floor front-crossbeam lower plate assembly 23. The rear-floor front-crossbeam upper plate assembly 22 and the rear-floor front-crossbeam lower plate assembly 23 are connected to form the rear-floor front crossbeam 301 which has a cavity, such that the rear-floor front crossbeam 301 supports floors in front and behind the rear-floor front crossbeam 301; the left and right sides of the rear-floor front crossbeam 301 are connected to a rear longitudinal beam, and transmit a lateral force of the vehicle body at the same time.

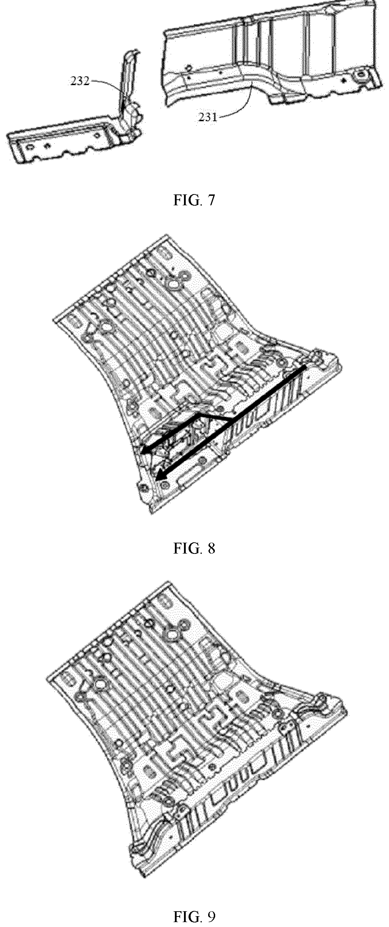

In one or more embodiments, referring to a schematic diagram of a transmission path of the lateral force of the leg-support installation structure in FIG. 8, the leg-support bracing assembly 21 is connected to the rear-floor front crossbeam 301 to form a branch beam, and a right side of the leg-support bracing assembly 21 is also overlapped at aright portion of the rear longitudinal beam. Therefore, in terms of transmitting the lateral force of the vehicle body, a defect of a force transmission caused by a sudden change of a right side structure of the rear-floor front crossbeam 301 can be compensated.

Referring to FIG. 5, in one or more embodiments, the rear-floor front-crossbeam upper plate assembly 22 is shortened in length by cutting off a portion of a right side thereof compared with that in a vehicle of conventional vehicle model.

Referring to FIG. 6, in one or more embodiments, the leg-support bracing assembly 21 is composed of seven components, namely the rear floor 201, the rear-floor second patch plate 203, the rear-floor first patch plate 202, the leg-support bracing-plate front blocking plate 2142, the leg-support bracing-plate side blocking plate 215, the leg-support bracing plate 216 and the leg-support installation plate 217. In one or more embodiments, the rear floor 201, compared with that in the vehicle of conventional vehicle model, is hollowed out at a position where the leg support 1 is disposed, so as to play a role in forming the above-mentioned hollowed-out leg-support accommodation space 10.

The rear-floor first patch plate 202 still plays a partial role of a structural member of the rear-floor front-crossbeam upper plate 24, and a material of the rear-floor first patch plate 202 is required to be stronger than that of a body of the rear floor 201. A profile surface of the rear-floor first patch plate 202 located below the leg support 1 is required to concave to avoid the leg support 1, and a reasonable gap is reserved to smoothly stow the leg support 1 as shown in FIG. 4.

The second rear floor patch plate 203 and the leg-support bracing plate 216 are both relatively fixedly connected to the rear floor 201. The rear-floor second patch plate 203 and the leg-support bracing plate 216 directly bear weights of a seat, the leg support 1 and the passengers, and thus a material thereof is selected to have high strength.

In one or more embodiments, a leg-support bracing plate 216 as shown in FIG. 6, includes a rear inclined surface, an upper top surface and a front inclined surface, in which the front and rear referring to directions here are consistent with front and rear directions of the vehicle. Reinforcement ribs are appropriately disposed at the front inclined surface and the rear inclined surface to play a role of Anti-Submarining for the passenger and to support the leg support 1. An anti-interference slot is disposed at the upper top surface, and the anti-interference slot is also disposed across the front incline surface and rear inclined surface (that is, the anti-interference slot is continuous to be arranged at the front inclined surface, the upper top surface and the rear inclined surface). The anti-interference slot prevents a motor screw 14 from interfering with the leg-support bracing plate 216 when a motor for the leg support 1 is installed and the leg support 1 is moved and stowed.

It is considered that an external noise can easily enter the vehicle through the rear-floor first patch plate 202, and therefore in one or more embodiments, a sound-absorbing cotton is assembled in an inner cavity of the leg-support bracing assembly 21 to reduce a noise. Referring to FIG. 6, in one or more embodiments, a larger mounting hole is opened and disposed at the front inclined surface of the leg-support bracing plate 216. The mounting hole serves as an assembly opening for the sound-absorbing cotton for assembling the sound-absorbing cotton into the inner cavity of the leg-support bracing assembly 21.

In one or more embodiments, a leg-support installation plate 217 is directly connected to a frame of the leg support 2. In an embodiment, four mounting points are disposed for vertically connecting the leg-support installation plate 217 by bolts and nuts. Amodel of force endured by the leg-support installation plate 217 may be simplified as a cantilever beam structure, but a stiffness of a mounting point at a front of the leg-support installation plate 217 may not meet requirements. Therefore, a leg-support installation plate 217 with a double-sided rib structure is provided, which can effectively support the mounting point at the front of the leg-support installation plate 217 and ensure that an installation stiffness requirement of the leg support 1 is met.

Referring to FIG. 5 and FIG. 6, in one or more embodiments, the rear-floor first patch plate 202 is located under the leg-support bracing plate 216. The rear-floor second patch plate 203 and the leg-support bracing-plate side blocking plate 215 are respectively located on left and right sides of the leg-support bracing plate 216 (in a scheme of disposing the leg support 1 at a right side of the rear seat, the rear-floor second patch plate 203 is located at the left side of the leg-support bracing plate 216, and the leg-support bracing-plate side blocking plate 215 is located at the right side of the leg-support bracing plate 216), and a leg-support bracing-plate front blocking plate 2142 is located at a front side of the leg-support bracing plate 216. The leg-support bracing plate 216, the rear-floor first patch plate 202, the rear-floor second patch plate 203, the leg-support bracing-plate side blocking plate 215 and the leg-support bracing-plate front blocking plate 2142 form a closed cavity, in which the sound-absorbing cotton is installed. When the external noise is transmitted into the vehicle through the rear-floor first patch plate 202, the noise is first partially reduced by the sound-absorbing cotton in this cavity, and then the noise is transmitted to surrounding panel members of this cavity and is further reduced by being reflected back to the sound-absorbing cotton. This process is repeated to enhance a noise reduction effect of the sound-absorbing cotton.

Referring to FIG. 7, in one or more embodiments, the rear-floor front-crossbeam lower plate assembly 23 includes a rear-floor front-crossbeam first lower plate 231 and a rear-floor front-crossbeam second lower plate 232 connected to a lateral side of the rear-floor front-crossbeam first lower plate 231. The rear-floor front-crossbeam second lower plate 232 is bent and has a drop height in a height direction. The rear-floor front-crossbeam lower plate assembly 23 is a structural component and a material thereof is selected to have high strength.

As shown in FIG. 7, in one or more embodiments, the rear-floor front-crossbeam second lower plate 232 is disposed in an L-shape, including a vertical side and a bottom side as shown in FIG. 7. This vertical side is connected to an side of the rear-floor front-crossbeam first lower plate 231. A portion of the rear-floor front-crossbeam lower plate assembly 23 which faces the leg support 1 is referred to as a portion with leg-support, and another portion is referred to as a portion without leg-support. The portion with leg-support corresponds to the vertical side of the rear-floor front-crossbeam second lower plate 232. Referring to FIG. 5 and FIG. 7, the portion without leg-support is the same as that in the vehicle of conventional vehicle model, and a required clearance between the portion with leg-support and an object arranged under the vehicle body must be ensured. On the basis that the required clearance between the portion with leg-support and a stowing space for the leg support 1 which is disposed above the portion with leg-support is ensured, a bottom edge of the rear-floor front-crossbeam second lower plate 232 is moved upward as far as possible to reduce a vertical drop height relative to the portion without leg-support, so as to achieve better force transmission effect.

Referring to FIG. 3 and FIG. 9, generally speaking, in a same model of vehicle, only a high-end model vehicle is equipped with the leg support 1, while a low-end model vehicle is not equipped with the leg support 1. When the low-end model vehicle is designed, an assembly structure of the rear floor 201 of the vehicle body is the same as that of the vehicle of conventional vehicle model. In an embodiment, the rear-floor front-crossbeam upper plate 24 and the rear-floor front-crossbeam lower plate 25 extend from left to right, and a shape of the rear floor 201 is kept regular. The rear floor 201 is overlapped with the rear-floor front-crossbeam upper plate assembly 22 and the rear-floor front-crossbeam lower plate assembly 23. Referring to FIG. 3 and FIG. 9, a position of the low-end model vehicle without the leg-support is designed to be consistent with a corresponding position of the high-end model vehicle.

Referring to FIG. 11, a schematic structural diagram of a leg-support installation structure 2 is shown according to some embodiments of the application. The leg-support installation structure 2 includes a rear-floor assembly 20, a rear-floor front crossbeam 301 and a leg-support bracing assembly 21. The rear-floor front crossbeam 301 is fixedly connected to the rear-floor assembly 20. The leg-support bracing assembly 21 is configured to be fixedly connected to a leg support 1. The leg-support bracing assembly 21 is fixedly connected to the rear-floor assembly 20. The leg-support bracing assembly 21 is disposed at an end in an axial direction of the rear-floor front crossbeam 301. The leg-support bracing assembly 21 which is disposed above the rear-floor assembly 20 encloses a leg-support accommodation space 10 with the rear-floor assembly 20.

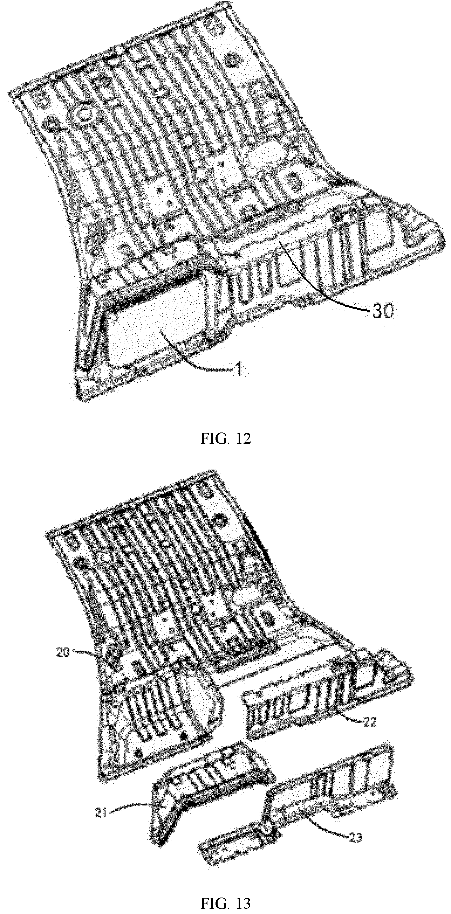

Referring to FIG. 11 and FIG. 12, when the leg support 1 is disposed to be behind the rear-floor front crossbeam 301 in the leg-support installation structure 2, a portion of the rear-floor front crossbeam 301 where the leg support 1 is disposed is changed to include an upper portion and a lower portion, and a portion of the rear floor 201 where the leg support 1 is disposed is correspondingly concaved and provided with a cover assembly. The leg support 1 is connected to the vehicle body through 4 bolts/nuts and 2 hooks. The following takes disposing the leg support 1 at the right side of the rear seat as an example for illustrating. A principle of disposing the leg support 1 at the left side of the rear seat is the same as a principle of disposing the leg support 1 at the right side of the rear seat.

Referring to FIG. 13, in one or more embodiments, a leg-support installation structure 2 includes a rear-floor assembly 20, a rear-floor front crossbeam 301, and a leg-support bracing assembly 21. In one or more embodiments, the rear-floor front crossbeam 301 includes a rear-floor front-crossbeam upper plate assembly 22 and a rear-floor front-crossbeam lower plate assembly 23. The rear-floor front-crossbeam upper plate assembly 22 and the rear-floor front-crossbeam lower plate assembly 23 are connected to form a rear-floor front crossbeam 301 which has a cavity. The rear-floor front crossbeam 301 is connected to the leg-support bracing assembly 21, to play a role of jointly supporting the seat, strengthening a rigidity of a floor and transmitting a lateral force of a vehicle body.

Referring to FIG. 11 and FIG. 13, in one or more embodiments, the leg-support bracing assembly 21 is located above the rear-floor assembly 20 to form a hollow cavity with an opening in front. The hollow cavity is the leg-support accommodation space 10 mentioned above, which is configured to accommodate the leg support 1 so that the leg support 1 in the stowed state does not protrude from the rear-floor front-crossbeam upper plate assembly 22.

Referring to FIG. 11 and FIG. 13, in one or more embodiments, the rear-floor front crossbeam 301 is fixedly connected to the rear-floor assembly 20, the leg-support bracing assembly 21 is configured to be fixedly connected to the leg support 1, and the leg-support bracing assembly 21 is fixedly connected to the rear-floor assembly 20. The leg-support bracing assembly 21 is approximately disposed at a right side of the rear-floor front crossbeam 301 when the leg support 1 is disposed at a right side of a rear seat, and the leg-support bracing assembly 21 is approximately disposed at a left side of the rear-floor front crossbeam 301 when the leg support 1 is provided at a left side of the rear seat, that is, the leg-support bracing assembly 21 is limited to be disposed at the end in the axial direction of the rear-floor front crossbeam 301.

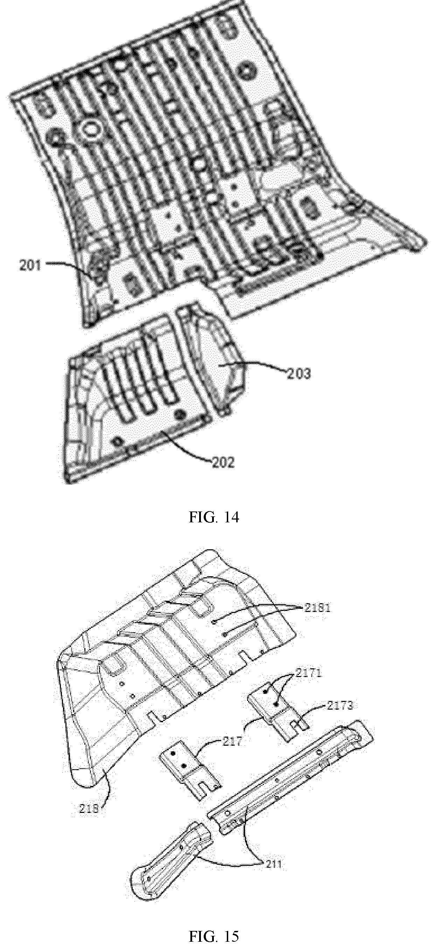

Referring to FIG. 14, in one or more embodiments, the rear-floor assembly 20 includes three components, namely a rear floor 201, a rear-floor first patch plate 202, and a rear-floor second patch plate 203. The rear floor 201, compared with a shape of that in a vehicle of conventional vehicle mode, is hollowed out at a position where the leg support 1 is disposed, and the position where the leg support 1 is disposed to also correspond to the leg-support accommodation space 10, so as to provide a reasonable arrangement region for the leg-support accommodation space 10. The rear-floor first patch plate 202 serves as a main structure for forming the leg-support accommodation space 10, and is fixedly connected to the rear floor 201. After the leg support 1 is installed, it can be considered that the rear-floor first patch plate 202 is mainly below the leg support 1. A portion of the rear-floor first patch plate 202 is lower than the rear floor 201, so as to expand and form a cavity which has sufficient height to accommodate the leg support 1, or in other words, a surface of the rear-floor first patch plate 202 below the leg support 1 is required to sink to avoid the leg support 1, so as to reserve a reasonable gap between the leg support 1 and the rear-floor first patch plate 202.

As shown in FIG. 14, in one or more embodiments, plate members forming a region for the leg-support accommodation space 10 also include a rear-floor second patch plate 203 arranged vertically. A lower edge of the rear floor second patch plate 203 is fixedly connected to the rear-floor first patch plate 202, and an upper edge of the rear-floor second patch plate 203 is fixedly connected to the rear floor 201.

In terms of function, the rear-floor first patch plate 202 still plays partial role of a structural member of the rear-floor front-crossbeam upper plate 24, and a material of the rear-floor first patch plate 202 is required to be stronger than that of a body of the rear floor 201. The rear-floor second patch plate 203 bears weights of a seat, the leg support 1 and the passengers, and thus a material of the rear-floor second patch plate 203 also is required to have high strength.

Referring to FIG. 15, in one or more embodiments, the leg-support bracing assembly 21 includes a leg-support cover plate 218 and a leg-support installation plate 217. In some embodiments, a leg-support reinforcement beam 211 connected to an edge of the leg-support cover plate 218 is further provided, which is divided into a first leg-support reinforcement beam 211 and a second leg-support reinforcement beam 211 as shown in FIG. 15. The leg-support reinforcement beam 211 strengthens the leg-support bracing assembly 21, and may also be replaced by other solutions such as reinforcement ribs. The leg-support reinforcement beam 211 itself supports the leg support 1, the seat and the passenger.

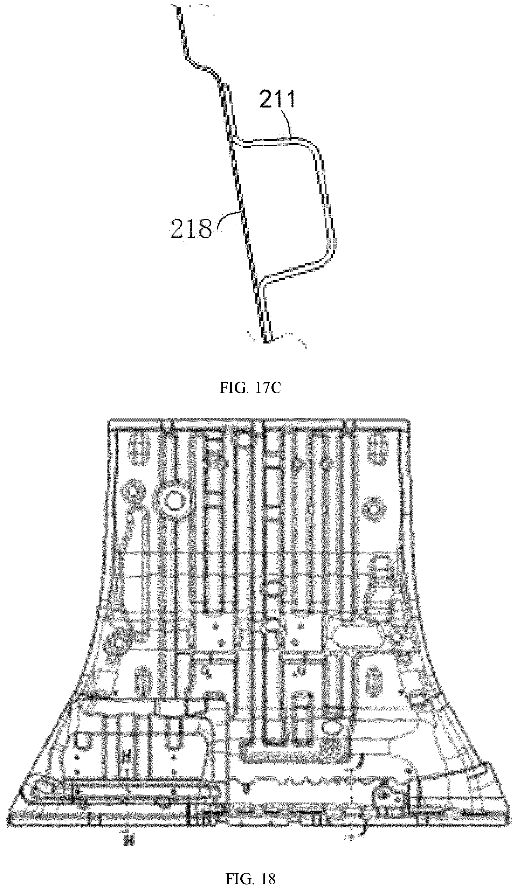

As shown in FIG. 15, in one or more embodiments, the first leg-support reinforcement beam 211 and the second leg-support reinforcement beam 211 are connected to form the leg-support reinforcement beam 211 located at an edge of a top surface of the leg-support cover plate 218. The top surface of the leg-support cover plate 218 here may be described as a side of the leg-support cover plate 218 away from the leg-support accommodation space 10. In one or more embodiments, as shown in FIG. 17C, the leg-support reinforcement beam 211 and the leg-support cover plate 218 form a closed cavity, which is advantageous to improving a structural strength of the leg-support bracing assembly 21.

In a solution in which the rear-floor front crossbeam 301 is connected to the leg-support bracing assembly 21, and the leg-support reinforcement beam 211 is provided, specifically the rear-floor front crossbeam 301 is connected to the leg-support reinforcement beam 211 of the leg-support bracing assembly 21.

As shown in FIG. 15, in one or more embodiments, the leg-support cover plate 218 is located below the leg-support reinforcement beam 211 and is arranged in an overturned basin shaped structure and is disposed in the leg-support installation structure 2. The overturned basin shaped structure includes three surfaces which are left surface, rear surface and right surface as shown in FIG. 15. The left, rear and right surfaces are all fixedly connected to the rear-floor assembly 20. An opening is provided in front of the leg-support cover plate 218 to serve as an installation entrance for the leg support 1. The rear surface of the leg-support cover plate 218 is inclined to play a role of Anti-Submarining for the passenger. Considering a large size of the leg-support cover plate 218, reinforcement ribs are provided at a region with larger area to increase a rigidity as shown in FIG. 15.

As shown in FIG. 15, in one or more embodiments, the leg-support installation plate 217 is arranged below the leg-support cover plate 218, or in other words, the leg-support installation plate 217 is fixedly disposed at a side of the leg-support cover plate 218 which faces the leg-support accommodation space 10. In some embodiments, two leg-support installation plates 217 may be provided, each of which is provided with two mounting holes 2171, that is, a total of four bolt and nut connection positions are provided to achieve a direct connection of the two leg-support installation plates 217 to the leg support 1. Correspondingly, referring to FIG. 15, the leg-support installation plate 217 is provided with a mounting hole 2171 for connecting to the leg support 1. The leg-support cover plate 218 is provided with a mounting point 2181 at a preset position corresponding to the mounting hole 2171.

In some embodiments in which the leg-support reinforcement beam 211 is provided, a front portion of the leg-support installation plate 217 may also be directly connected to the leg-support reinforcement beam 211, which is advantageous to improving a rigidity at the mounting hole 2171 when the leg-support installation plate 217 is connected to the leg support 1.

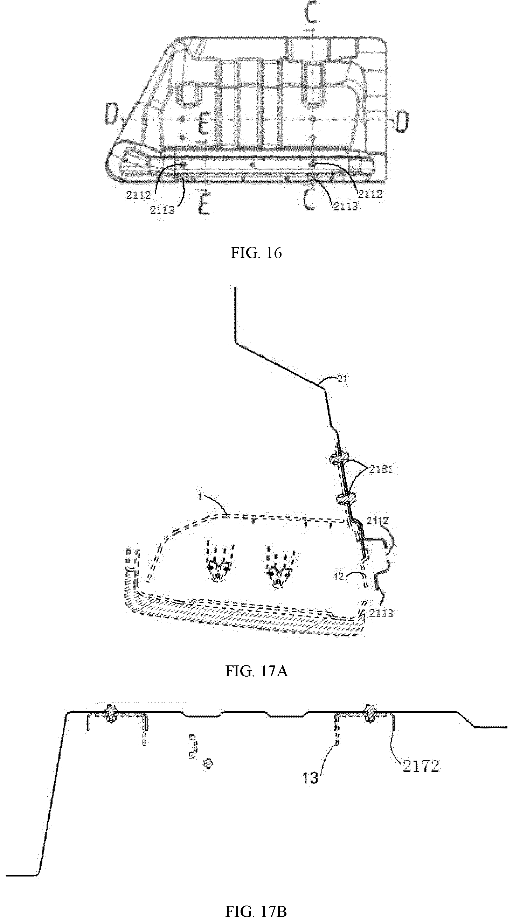

Regarding an installation process of the leg support 1, referring to FIG. 16 and FIG. 17A, in one or more embodiments, a U-shaped opening 2173 is formed at an end in a longitudinal direction of the leg-support installation plate 217. The U-shaped opening 2173 is configured to guide a pre-hook 12 of the leg-support installation beam 13 belonging to the leg support 1 to move until the pre-hook 12 is hung on the leg-support installation plate 217 when the leg support 1 moves into the leg-support accommodation space 10, such that the mounting hole 2171 is aligned with the mounting point 2181 of the leg-support cover plate 218.

In one or more embodiments, referring to FIG. 16 and FIG. 17B, a transverse cross-section of the leg-support installation plate 217 is a U-shaped structure and includes two side flangings 2172. The two side flangings 2172 not only strengthens a structural strength of the leg-support installation plate 217, but also laterally limits the leg-support installation beam 13 which is located between the two side flangings 2172.

In one or more embodiments, referring to FIG. 16, a leg-support installation positioning indication boss 2113 is also disposed at the leg-support reinforcement beam 211. A fixing point of the leg support 1 is pushed in along the leg-support installation positioning indication boss 2113, so that the leg-support installation beam 13 is pushed in a region between the two side flangings 2172 of the leg-support installation plate 217, thereby smoothly realizing a lateral limitation of the leg support 1.

In one or more embodiments, referring to FIG. 17A, the leg-support reinforcement beam 211 is provided with a leg-support pre-hanging visual hole 2112, through which it is possible to observe whether the pre-hook 12 is hung on the leg-support installation plate 217, so as to facilitate an actual operation.

The above defined leg-support installation positioning indication boss 2113 and leg-support pre-hanging visual hole 2112 are disposed at the leg-support reinforcement beam 211. If a leg-support bracing assembly 21 is not provided with the leg-support reinforcement beam 211, then the leg-support installation positioning indication boss 2113 and leg-support pre-hanging visual hole 2112 are disposed at the leg-support cover plate 218 or other corresponding structures of the leg-support cover plate 218.

The above technical features that play an auxiliary role in an assembly process of the leg support 1 can function in combination, and thus an assembly method for the above technical features is provided: when the leg support 1 is assembled, the fixing point of the leg support 1 is pushed backward along the leg-support installation positioning indication boss 2113 of the leg-support reinforcement beam 211 of the leg support 1, and the leg support 1 is laterally restricted by the two side flangings 2172 of the leg-support installation plate 217 to be positioned laterally; the fixing point of the leg support 1 is pushed until it cannot be pushed to move further longitudinally, then it is indicated that the fixing point of the leg support 1 is limited by the U-shaped opening 2173 of the leg-support installation plate 217; and at the same time, it can be seen from the leg-support pre-hanging visual hole 2112 of the leg-support reinforcement beam 211 of the leg support 1 that the pre-hook 12 of the leg support 1 is hooked on the leg-support installation plate 217; at this time, hands holding up the leg support 1 can be released, and assembling holes of the leg support 1 and corresponding assembling holes of the vehicle body are also aligned, so that fastening bolts can be directly installed to complete an installation of the leg support 1. As described above, an assembly of the leg support 1 can be made more convenient and labor-saving by providing the pre-hooking hook 12 in conjunction with the leg-support installation plate 217.

An side of the rear-floor front-crossbeam upper plate assembly 22, compared with that in the vehicle of conventional vehicle model, is partially cut off, and thus a length thereof is reduced. Referring to FIG. 7, in one or more embodiments, the rear-floor front-crossbeam lower plate assembly 23 includes a rear-floor front-crossbeam first lower plate 231 and a rear-floor front-crossbeam second lower plate 232. The rear-floor front-crossbeam second lower plate 232 is disposed as an L-shaped structure. A side of the L-shaped structure of the rear-floor front-crossbeam second lower plate 232 is connected to an end in a length direction of the rear-floor front-crossbeam first lower plate 231, and another side of the L-shaped structure of the rear-floor front-crossbeam second lower plate 232 is connected to the rear-floor assembly 20. The rear-floor front-crossbeam lower plate assembly 23 is a structural component and a material thereof is selected to have high strength. A structure of the rear-floor front-crossbeam lower plate assembly 23, compared with that in the vehicle of conventional vehicle model, has a larger vertical drop height between the left side and the right side. At a position without the leg support 1, the structure of the rear-floor front-crossbeam lower plate assembly 23 is the same as that of the vehicle of conventional vehicle model. At a position with the leg support 1, after a required clearance between the rear-floor front-crossbeam lower plate assembly 23 and the leg support 1 which is disposed above the rear-floor front-crossbeam lower plate assembly 23 is ensured, cross-sections of beams in the rear-floor front-crossbeam lower plate assembly 23 are made as large as possible, that is, a position with the leg support 1 of the rear-floor front-crossbeam lower plate assembly 23 is raised as much as possible to reduce a vertical drop height of a profile surface of the position with the leg support 1 relative to that of a side without the leg support 1 of the rear-floor front-crossbeam lower plate assembly 23, which is conducive to a structural continuity of the rear-floor front-crossbeam lower plate assembly 23 and a better force transmission effect can be achieved.

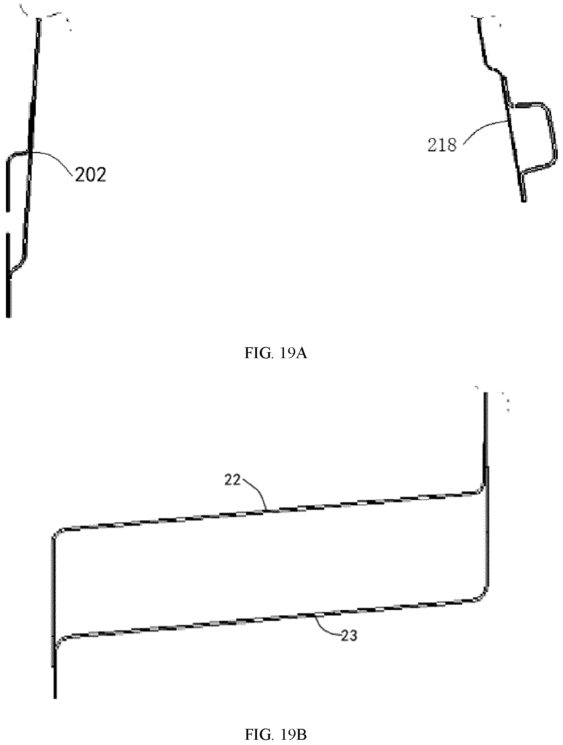

It is mentioned above that the rear-floor front crossbeam 301 includes a rear-floor front-crossbeam upper plate assembly 22 and a rear-floor front-crossbeam lower plate assembly 23. Referring to FIG. 18 and FIG. 19B, in one or more embodiments, the rear-floor front-crossbeam upper plate assembly 22 and the rear-floor front-crossbeam lower plate assembly 23 are connected to form a rear-floor front crossbeam 301 which has a cavity, and the cavity is shown in FIG. 19B. The rear-floor front crossbeam 301 supports floors which are located in front and behind the rear-floor front crossbeam 301.

Referring to FIG. 18 and FIG. 19A, a transmission way of the lateral force is as follows: at the right side of the rear-floor assembly 20, the leg-support bracing assembly 21 is connected to the rear-floor front crossbeam 301 to form a branch beam which is located upper, and the rear-floor assembly 20 and the rear-floor front-crossbeam lower plate assembly 23 form a crossbeam which has a cavity as another branch beam which is located lower. Two branch beams which are located upper and lower support floors which are located in front and behind the two branch beams, respectively. The two branch beams form a whole structure with the rear-floor front crossbeam 301, and two ends of the whole structure are overlapped at a left rear longitudinal beam and a right rear longitudinal beam of the vehicle body to jointly transmit the lateral force from the vehicle body.

Considering a noise coming from outside the vehicle and transmitted from a position underneath the leg support 1, the sound-absorbing cotton may be laid on the rear-floor first patch plate 202. A solution of laying the sound-absorbing cotton under the leg support 1 has advantages that there is a large operating space and a convenient operation, and the sound-absorbing cotton is not required to fill an entire gap between the rear floor 201 and the leg support 1, thereby saving an amount of sound-absorbing cotton used.

Referring to FIG. 12 and FIG. 9, FIG. 9 shows a scheme of the vehicle of conventional vehicle model of a low-end model vehicle model without a leg support 1, in which the rear-floor front-crossbeam upper plate assembly 22 and the rear-floor front-crossbeam lower plate assembly 23 extend from left to right. The rear floor 201 has a regular shape and is overlapped with the rear-floor front-crossbeam upper plate assembly 22 and the rear-floor front-crossbeam lower plate assembly 23. Vehicles with leg support 1 are generally high-end model vehicle. It can be seen that portions of the low-end model vehicles without the leg support 1 are mostly consistent with portions without the leg support 1 of the high-end model vehicles with the leg support 1. Therefore, if a rear-floor assembly of the low-end model vehicle adopts a solution in this disclosure, most of structures of the above-mentioned leg-support installation structure 2 can be formed by cutting, thereby saving a mold cost and investment cost.

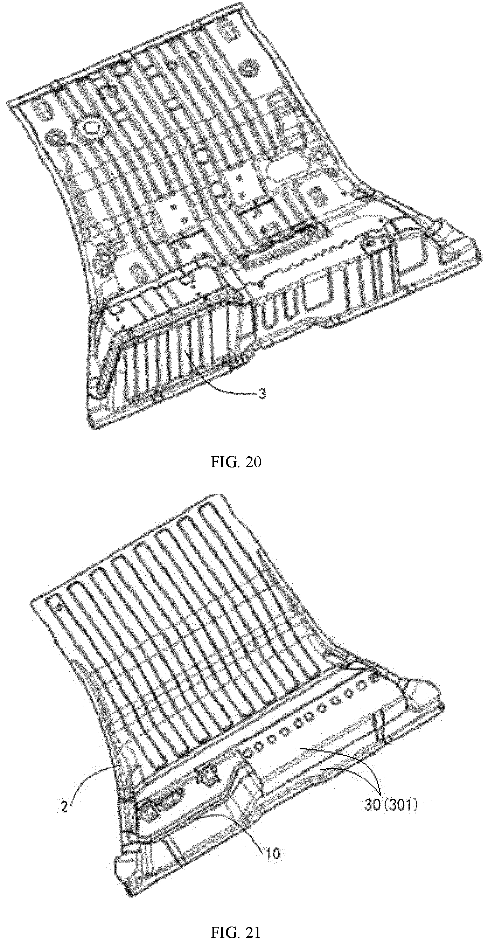

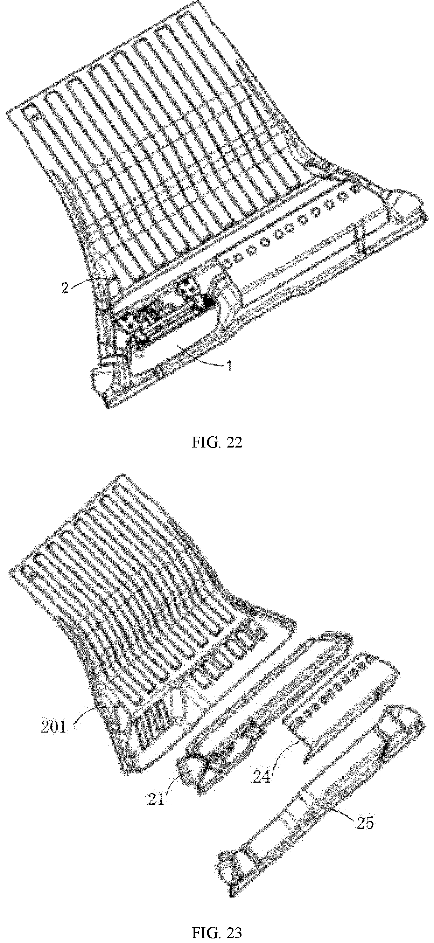

Referring to FIG. 21 and FIG. 23, a schematic structural diagram of a leg-support installation structure 2 is shown according to some embodiments of the application. The leg-support installation structure 2 includes a rear floor 201, a leg-support bracing assembly 21 and a rear-floor front crossbeam 301. The leg-support bracing assembly 21 is fixedly connected to the rear floor 201 and is configured to install the leg support 1. The rear-floor front crossbeam 301 is respectively fixedly connected to a front end of the rear floor 201 and the leg-support bracing assembly 21. The rear-floor front crossbeam 301 and the leg-support bracing assembly 21 are disposed side by side in a direction which is vertical to an axial direction of the rear-floor front crossbeam 301. Two ends of the leg-support bracing assembly 21 and two ends of the rear-floor front crossbeam 301 are all respectively fixedly connected to left and right rear longitudinal beams of a vehicle body. The leg-support bracing assembly 21 and the rear-floor front crossbeam 301 jointly form a leg-support accommodation space 10, and a portion of the rear floor 201 corresponding to the leg-support accommodation space 10 is disposed to concave downward.

Referring to FIG. 21, FIG. 22 and FIG. 23, in one or more embodiments, the leg support 1 is arranged behind the rear-floor front crossbeam 301, and a portion of the rear-floor front crossbeam 301 where the leg support 1 is disposed is changed to include an upper portion and a lower portion, and a portion of the rear floor 201 where the leg support 1 is disposed is correspondingly concaved. The leg support 1 is connected to the vehicle body via bolts/nuts. The following takes disposing the leg support 1 at the right side of the rear seat as an example. A principle of disposing the leg support 1 at the left side of the rear seat is the same as a principle of disposing the leg support 1 at the right side of the rear seat.

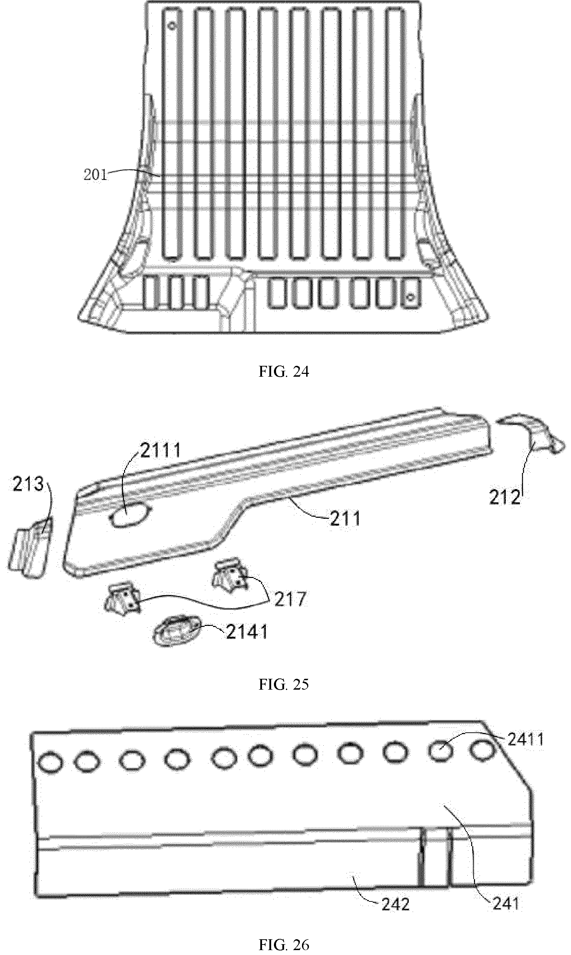

Referring to FIG. 23, in one or more embodiments, a leg-support installation structure 2 includes a rear floor 201, a leg-support bracing assembly 21 and a rear-floor front crossbeam 301. In a scheme shown in FIG. 25, the rear-floor front crossbeam 301 is composed of a rear-floor front-crossbeam upper plate 24 and a rear-floor front-crossbeam lower plate 25. The rear-floor front crossbeam 301 may also be disposed as other structural forms. Referring to FIG. 21 to FIG. 23, in the leg-support installation structure 2, the leg-support bracing assembly 21 is fixedly connected to the rear floor 201 and is configured to install the leg support 1. The rear-floor front crossbeam 301 is respectively fixedly connected to a front end of the rear floor 201 and the leg-support bracing assembly 21. The rear-floor front crossbeam 301 and the leg-support bracing assembly 21 are disposed side by side in a direction which is vertical to an axial direction of the rear-floor front crossbeam 301. The leg-support bracing assembly 21 and the rear-floor front crossbeam 301 jointly form a leg-support accommodation space 10.

The leg support 1, when in a stowed state, is located in the leg-support accommodation space 10, so that the leg support 1 in the stowed state does not protrude from the rear-floor front crossbeam 301 in a longitudinal direction of a vehicle. On the one hand, a legroom L1 for the rear passengers is increased, thereby making the rear passengers more comfortable. On the other hand, a longitudinal thickness L2 of a carpet under the rear seat without the leg support 1 does not need to be thickened, thereby reducing a material cost of the carpet.

Moreover, a portion of the rear floor 201 corresponding to the leg-support accommodation space 10 is disposed to concave downward, so that the leg-support accommodation space 10 has a sufficiently large height for a smooth installation and movement of the leg support 1.

Generally speaking, the two ends of the rear-floor front crossbeam 301 must be fixedly connected to the left and right rear longitudinal beams of the vehicle body, respectively. Referring to FIG. 21 to FIG. 23, in one or more embodiments, two ends of the leg-support bracing assembly 21 may further be fixedly connected to the left and right rear longitudinal beams of the vehicle body respectively, such that a stronger bearing capacity for the lateral force of the vehicle body can be achieved which is advantageous.

It is mentioned above that in some embodiments, the rear-floor front crossbeam 301 includes a rear-floor front-crossbeam upper plate 24 and a rear-floor front-crossbeam lower plate 25. Referring to FIG. 21 and FIG. 23, the rear-floor front-crossbeam upper plate 24 and the rear-floor front-crossbeam lower plate 25 are fixedly connected to form a rear-floor front crossbeam 301 which has a cavity and supports the seat and strengthens a stiffness of the floors, that is, the floors in front and behind the rear-floor front crossbeam 301 is supported by the rear-floor front crossbeam 301. The rear-floor front-crossbeam upper plate 24 is disposed to avoid the leg-support accommodation space 10 and is fixedly connected to the leg-support bracing assembly 21. Two ends of the rear-floor front-crossbeam lower plate 25 are configured to be fixedly connected to the left and right rear longitudinal beams of the vehicle body.

In one or more embodiments, the leg-support bracing assembly 21 located above the rear floor 201 forms a crossbeam which has an enclosed cavity with the rear floor 201. This crossbeam fixes and supports the leg support 1, and also supports the floors in front and behind this crossbeam and transmits the lateral force of the vehicle body. The leg support 1 does not protrude longitudinally from the rear-floor front-crossbeam upper plate 24. Referring to FIG. 24, the shape of the rear floor 201, compared with that in the vehicle of conventional vehicle model, is disposed to concave downward at a position (corresponding to a region of the leg-support accommodation space 10) where the leg support 1 is disposed to avoid the leg support 1, and a reasonable gap is reserved between the rear floor 201 and the leg support 1.

Referring to FIG. 25, in one or more embodiments, the leg-support bracing assembly 21 includes a leg-support reinforcement beam 211, a leg-support reinforcement-beam left blocking plate 212, a leg-support reinforcement-beam right blocking plate 213, a leg-support installation plate 217 and a leg-support reinforcement-beam front blocking plate 2141, wherein the leg-support reinforcement-beam front blocking plate 2141 is an optional feature.

Referring to FIG. 25, in one or more embodiments, the leg-support reinforcement beam 211 is located uppermost in the leg-support bracing assembly 21. The leg-support reinforcement beam 211 and the rear floor 201 form a closed cavity, thereby effectively supporting the leg support 1, the seat and the passenger. The leg-support reinforcement beam 211 and the rear floor 201 form the closed cavity, and a bottom (or a side close to the rear floor 201) of the leg-support reinforcement beam 211 is disposed to be open. The leg-support reinforcement beam 211 includes a front inclined surface, a rear inclined surface and a top surface. The rear inclined surface plays a role of Anti-Submarining for the passenger.

In some embodiments, an avoidance hole 2111 is opened on the front inclined surface (referring to FIG. 25, FIG. 13 and FIG. 14), and a position of the avoidance hole corresponds to a motor screw 14 of the leg support 1 to provide a space for a movement of a motor for the leg support 1 when the leg support 1 is assembled and used. Furthermore, a leg-support reinforcement-beam front blocking plate 2141 is provided to block the avoidance hole 2111. The leg-support reinforcement-beam front blocking plate 2141 is disposed to be fixedly connected to the leg-support reinforcement beam 211, so as to increase a rigidity of the leg-support reinforcement beam 211 and reflect a noise transmitted from a bottom of the vehicle. In some embodiments, the leg-support reinforcement-beam front blocking plate 2141 also needs to retain an avoidance function of the avoidance hole 2111, and thus the leg-support reinforcement-beam front blocking plate 2141 may be provided in a basin shaped structure which has a basin-shaped opening facing a front of the basin shaped structure, thereby forming a concave avoidance groove to retain the avoidance function which provides a space for the movement of the motor for the leg support 1 when the leg support 1 is assembled and used.

Referring to FIG. 25, in one or more embodiments, the leg-support reinforcement-beam left blocking plate 212 and the leg-support reinforcement-beam right blocking plate 213 are respectively located at left and right sides of the leg-support reinforcement beam 211, and are connected to the leg-support reinforcement beam 211 to block openings at two sides of the leg-support reinforcement beam 211.

Referring to FIG. 25, in one or more embodiments, the leg-support installation plate 217 is arranged at a right front of the leg-support reinforcement beam 211 (in a scheme that the leg support 1 is disposed at a left side of the rear seat, the leg-support installation plate 217 is arranged at a left front of the leg-support reinforcement beam 211), the leg-support installation plate 217 is fixedly connected to the leg-support reinforcement beam 211, and is provided with a mounting hole for connecting to the leg support 1. In FIG. 25, it is shown that there are two leg-support installation plates 217, each of which has two connection points for bolts/nuts. When the leg support 1 is assembled, the fixing points of the leg support 1 are aligned with the connection points for the bolts/nuts of the leg-support installation plate 217, and the fastening bolts can be directly installed. A transverse cross-section of the leg-support installation plate 217 may be provided as a U-shaped structure which has the two side flangings 2172 to improve a rigidity of the leg-support installation plate 217.

It is mentioned above that a bottom of the leg-support reinforcement beam 211 is open, and it is also specified that the leg-support reinforcement beam 211 is fixedly connected to the rear floor 201 and the rear-floor front crossbeam 301 respectively. A lower edge of the leg-support reinforcement beam 211 is placed on the rear floor 201, and a portion of the lower edge of the leg-support reinforcement beam 211 is placed at a concaved portion of the rear floor 201.

Referring to FIG. 21, FIG. 23 and FIG.26, in one or more embodiments, a transverse cross-section of the rear-floor front-crossbeam upper plate 24 is in an L-shape. The rear-floor front-crossbeam upper plate 24 includes a top portion 241 and a vertical portion 242. The top portion 241 is disposed above the leg-support bracing assembly 21 and is fixedly connected to the leg-support bracing assembly 21. The top portion 241 is spaced apart from the rear-floor front-crossbeam lower plate 25, and the vertical portion 242 is fixedly connected to a side of rear-floor front-crossbeam lower plate 25. A plurality of welding clamp through holes 2411 are opened on the top portion 241 for a welding clamp to pass through when the leg-support bracing assembly 21 is welded to the rear floor 201.

As described above, a rear end of the rear-floor front-crossbeam upper plate 24 is overlapped on the leg-support reinforcement beam 211, and a front end of the rear-floor front-crossbeam upper plate 24 is overlapped on the rear-floor front-crossbeam lower plate 25. The rear-floor front-crossbeam upper plate 24, the leg-support reinforcement beam 211 and rear-floor front-crossbeam lower plate 25 form a beam which has a closed cavity, and thus it is advantageous to supporting the seat and the passengers. A length of the rear-floor front-crossbeam upper plate 24, compared with that in the vehicle of conventional vehicle model, only covers a portion of a lower portion of the seat without the leg support 1, and a lateral outer side of the rear-floor front-crossbeam upper plate 24 does not need to be connected to a rear longitudinal beam of the vehicle body.

Referring to FIG. 27, in one or more embodiments, the rear-floor front-crossbeam lower plate 25 includes three components: a rear-floor front-crossbeam lower-plate main body 251, a rear-floor front-crossbeam lower-plate left connecting plate 252 and a rear-floor front-crossbeam lower-plate right connecting plate 253. The rear-floor front-crossbeam lower-plate left connecting plate 252 and the rear-floor front-crossbeam lower-plate right connecting plate 253 are respectively connected to two ends in a length direction of the rear-floor front-crossbeam lower-plate main body 251. The floor front crossbeam lower plate left connecting plate 252 and the rear-floor front-crossbeam lower-plate right connecting plate 253 are configured to be fixedly connected to the left and right rear longitudinal beams of the vehicle body.

The rear-floor front-crossbeam lower plate 25 is a structural component and a material thereof is selected to have high strength. The rear-floor front-crossbeam lower plate 25, compared with that in the vehicle of conventional vehicle model, has a larger vertical drop height between left and right sides thereof. A structure of a portion without leg-support 222 of the rear-floor front-crossbeam lower plate 25 is kept the same as that of the vehicle of conventional vehicle model. Regarding a portion with leg-support 221 of the rear-floor front-crossbeam lower plate 25, an upper edge of the portion with leg-support 221 is raised as much as possible after a required gap for accommodating the leg support 1 in the leg-support accommodation space 10 is ensured, so as to reduce a vertical drop height of a profile surface of the portion with leg-support 221 relative to that of the portion without leg-support 222, which is conducive to a structural continuity of the rear-floor front-crossbeam lower plate 25 and a better force transmission effect can be achieved. Correspondingly, as shown in FIG. 27, the upper edge of the portion with leg-support 221 is lower than an upper edge of the portion without leg-support 222 . The rear-floor front-crossbeam lower plate 25 is divided into three components as described above. The three components can also be combined into one piece, which has better structural properties.

In some embodiments, sound absorbing material such as the sound-absorbing cotton, may be laid on an upper edge of the leg-support bracing assembly 21 and/or an upper edge of the rear-floor front-crossbeam lower plate 25 to mitigate a the noise coming from outside the vehicle from a position underneath the leg support 1. A laying of the sound-absorbing cotton here also has advantages that there is a large operating space and a convenient operation, and the sound-absorbing cotton does not need to fill an entire gap between the rear floor 201 and the leg support 1, thereby saving the amount of sound-absorbing cotton used.

Referring to FIG. 28, which isa structural schematic diagram of the leg-support installation structure 2 in some embodiments. The leg-support installation structure 2 includes a rear floor 201, a leg-support bracing assembly 21 and a rear-floor front crossbeam 301. A hollowed-out region is disposed at an outer side of a front end of the rear floor 201. The leg-support bracing assembly 21 is located above the hollowed-out region of the rear floor 201 and is fixedly connected to the rear floor 201. The leg-support bracing assembly 21 is configured to install the leg support 1. The rear-floor front crossbeam 301 is fixedly connected to the front end of the rear floor 201. Two ends of the rear-floor front crossbeam 301 are configured to be fixedly connected to the left and right rear longitudinal beams of the vehicle body. The rear-floor front crossbeam 301 includes a portion with leg-support 221 which corresponds to the hollowed-out region of the rear floor 201 and is disposed to concave downward to avoid the leg support 1.

Referring to FIG. 28, FIG. 29 and FIG. 30, in one or more embodiments, in the leg-support installation structure 2, the leg support 1 is selected to be arranged behind the rear-floor front crossbeam 301, and a position of the rear-floor front crossbeam 301 where the leg support 1 is disposed is disposed to concave down to avoid the leg support 1. The leg support 1 is connected to the leg-support bracing assembly 21 by the bolts/nuts. The following takes disposing the leg support 1 at the right side of the rear seat as an example. A principle of disposing the leg support 1 at the left side of the rear seat is the same as a principle of disposing the leg support 1 at the right side of the rear seat.

Referring to FIG. 29 and FIG. 30, in one or more embodiments, the leg-support installation structure 2 includes a rear floor 201, a leg-support bracing assembly 21, and a rear-floor front crossbeam 301. In some embodiments, the rear-floor front crossbeam 301 is only a single-layer plate, and a rear-floor middle-crossbeam assembly 26 is added below a mounting point of the leg support 1 as a reinforcement crossbeam.

Referring to FIG. 28, FIG. 29 and FIG. 30, the rear floor 201, compared with a shape of that in the vehicle of conventional vehicle mode, is disposed with a hollowed-out region at a position where the leg support 1 is disposed, and the leg support 1 can be placed in the hollowed-out region, so that a vertical projection of the leg support 1 can be located in a vertical projection of the rear floor 201.

Referring to FIG. 28, FIG. 29 and FIG. 30, in one or more embodiments, the leg-support bracing assembly 21 is located above the hollowed-out region of the rear floor 201 and is fixedly connected to the rear floor 201. The leg-support bracing assembly 21 is configured to install the leg support 1. In one or more embodiments, referring to FIG. 30 and FIG. 31, the leg-support bracing assembly 21 includes a reinforcement plate 219 and a leg-support installation plate 217 which is mounted at the reinforcement plate 219. The number of the leg-support installation plates 217 may be two as shown in the FIG. 31, and may also be disposed according to an installation requirement of the leg support 1. The reinforcement plate 219 is located above the hollowed-out region of the rear floor 201 and is fixedly connected to the rear floor 201. An inclined surface of the reinforcement plate 219 can play a role of Anti-Submarining for the passenger. Two leg-support installation plates 217 are configured to be fixedly connected to the leg support 1 and are provided with mounting points for the leg support 1.

Referring to FIG. 30 and FIG. 32, in one or more embodiments, the rear-floor front crossbeam 301 is fixedly connected to the front end of the rear floor 201. Two ends of the rear-floor front crossbeam 301 are configured to be fixedly connected to the left and right rear longitudinal beams of the vehicle body. The rear-floor front crossbeam 301 includes a portion with leg-support 221 which corresponds to the hollowed-out region of the rear floor 201 and is disposed to concave downward to avoid the leg support 1.

When the rear-floor front crossbeam 301 is disposed as a single-layer plate, which can be referred to as the rear-floor front-crossbeam upper plate assembly 22. Referring to FIG. 30 and FIG. 32, in one or more embodiments, the rear-floor front-crossbeam upper plate assembly 22 includes a portion with leg-support 221 and a portion without leg-support 222 which is connected to the portion with leg-support 221. An upper edge of the portion with leg-support 221 is lower than an upper edge of the portion without leg-support 222. An end of the portion with leg-support 221 and an end of the portion without leg-support 222 that are away from each other are fixedly connected to the left and right rear longitudinal beams of the vehicle body respectively.

The rear-floor front-crossbeam upper plate assembly 22 is a structural component, and thus a material thereof is selected to have high strength. There is a large vertical drop height between a left side height and a right side height of the rear-floor front-crossbeam upper plate assembly 22. The portion without leg-support 222 is the same as that of the vehicle of conventional vehicle model, and the portion with leg-support 221 is disposed to concave down to avoid the leg support 1. In some embodiments, in a condition that a required clearance above the portion with leg-support 221 where the leg support 1 is disposed is ensured, the upper edge of the portion with leg-support 221 is raised as high as possible, thereby reducing a vertical drop height of a profile surface of the portion with leg-support 221 relative to that of a side of the portion without leg-support 222, which is conducive to a structural continuity of the rear-floor front-crossbeam lower plate assembly 23 and a better force transmission effect can be achieved.

As described above, the rear-floor front-crossbeam upper plate assembly 22 is connected to the left and right rear longitudinal beams of the vehicle body. The rear-floor front-crossbeam upper plate assembly 22 is connected to the rear floor 201. In terms of force transmission, the rear-floor front-crossbeam upper plate assembly 22 not only transmits the lateral force of the vehicle body, but also supports floors in front and behind the rear-floor front-crossbeam upper plate assembly 22.

Referring to FIG. 28 and FIG. 30, in one or more embodiments, the rear-floor middle-crossbeam assembly 26 traverses beneath the rear floor 201. The rear-floor middle-crossbeam assembly 26 is configured to be fixedly connected to the left and right rear longitudinal beams of the vehicle body. In a condition that a requirement of fixing the leg support 1 is met, the rear-floor middle-crossbeam assembly 26 is as close to a front of the vehicle body as possible. In some embodiments, the rear-floor middle-crossbeam assembly 26, the rear floor 201 and the leg-support bracing assembly 21 form a reinforcement crossbeam which has a closed cavity. As shown in FIG. 30, a groove with an opening facing downward is disposed at a front end that has not been hollowed out of the rear floor 201. The leg-support bracing assembly 21 is also bent to form a groove with an opening facing downward to cooperate with the rear-floor middle-crossbeam assembly 26 which is also provided with a groove with an opening facing downward, and thus a reinforcement crossbeam which has a closed cavity can be smoothly formed. A function of the reinforcement crossbeam which has the closed cavity is to support the seats and strengthen the rigidity of the floor, and to make up for an insufficient performance of the rear-floor front-crossbeam upper plate assembly 22 which is the single-layer plate. Since a traditional rear-floor front-crossbeam lower plate is eliminated, a space under the rear floor 201 is increased, which is conducive to an arrangement of other items under the rear floor 201. A position where the rear-floor middle-crossbeam assembly 26 is located is exactly where supporting crossbeams of a fuel tank, the seats and so on are arranged. After the rear-floor middle-crossbeam assembly 26 is provided, there is no need to additionally arrange supporting crossbeams for the fuel tank or the seats, and thus an overall weight of the vehicle body is reduced.

In one or more embodiments, the rear-floor middle-crossbeam assembly 26 includes a rear-floor middle crossbeam 261, which traverses beneath the rear floor 201. Two ends of the rear-floor middle crossbeam 261 are fixedly connected to the left and right rear longitudinal beams of the vehicle body. The rear-floor middle crossbeam 261, the rear floor 201, and the leg-support bracing assembly 21 form a reinforcement crossbeam which has a closed cavity. A front inclined surface of the rear-floor middle crossbeam 261 is provided with an avoidance hole, which is configured to provide a space for a movement of a motor for the leg support 1 when the leg support 1 is assembled and used. The relevant avoidance hole is shown in FIG. 34, which is configured to avoid the motor screw 14 of the leg support 1.

Referring to FIG. 34 and FIG. 33, in one or more embodiments, the rear-floor middle-crossbeam assembly 26 further includes a blocking plate 262, which is fixedly connected to the rear floor middle beam 261 and blocks the avoidance hole. The blocking plate 262 is formed with a concave avoidance groove 2621 which is configured to provide a space for the movement of the motor for the leg support 1 when the leg support 1 is assembled and used. The blocking plate 262 is shaped in a basin shaped structure which has a basin-shaped opening thereof facing a front of the basin shaped structure. The blocking plate 262 not only increases a rigidity of the rear-floor front crossbeam 301 and mitigates a noise transmitted from a bottom of the vehicle body, but also forms a concave avoidance groove 2621 to retain an avoidance function which provides the space for the movement of the motor for the leg support 1 when the leg support 1 is assembled and used.

Here, a method for assembling the leg support 1 is illustrated: first, the motor screw 14 of the leg support 1 is placed in a concave portion of the blocking plate 262, then the fixing point of the leg support 1 is aligned with the mounting hole, and the fastening bolts can be installed.

Taking the noise outside the vehicle into consideration, the sound-absorbing material such as sound absorbing cotton, may be laid on an upper edge of the leg-support bracing assembly 21 and/or an upper edge of the rear-floor front crossbeam 301. A solution of laying the sound-absorbing cotton under the leg support 1 has advantages that there is a large operating space and a convenient operation, and the sound-absorbing cotton does not need to fill an entire gap between the rear floor 201 and the leg support 1, thereby saving an amount of sound-absorbing cotton used.

According to one or more embodiments of the second aspect of the application, a vehicle is provided, including the leg-support installation structure 2 disclosed in any embodiment of the first aspect, so as to protect the vehicle including the leg-support installation structure. A leg support 1 can be installed inside the vehicle body by adopting the leg-support installation structure 2 disclosed in any of the above-mentioned embodiments to increase a comfortability for rearing the seats and reduce a cost of carpet material.

The crossbeam 30 in the leg-support installation structure 2 may be any crossbeam of the vehicle body. An ordinary family passenger car has a double row of seats. Front seats are respectively a driver seat and a co-driver seat. The front seats are installed on a front seat crossbeam, and the rear seats are installed on a rear seat crossbeam. The crossbeam 30 may be the front seat crossbeam, or may also be the rear seat crossbeam. A Multi-Purpose Vehicle (MPV) has three rows of seats and correspondingly has at least three seat crossbeams. A leg-support accommodation space 10 may be provided on any of the three seat crossbeams. For example, the leg-support accommodation space 10 may be provided at a left side of a second row seat crossbeam.

In one or more embodiments, the vehicle further includes a leg support 1 or a profiling member 3. The leg support 1 is placed in the leg-support accommodation space 10 and does not protrude from the rear-floor front crossbeam 301 when in the stowed state, as shown in FIG. 4, FIG. 12, FIG. 22 and FIG. 29. In some embodiments, the profiling member 3 is installed in the leg-support accommodation space 10, as shown in FIG. 9 and FIG. 20.

Generally speaking in a same model of vehicle, only a high-end model vehicle is equipped with the leg support 1, while low-end model vehicle is not equipped with the leg support 1. When a low-end model vehicle is designed, the rear-floor assembly 20 may be consistent with that in a vehicle body of a vehicle model which has the leg support 1. A profiling member 3 is used instead of the leg support 1 to be assembled at a position where the leg support 1 is disposed. Therefore, a development of a vehicle body can be avoided, which is advantageous to a cost control for production and manufacturing of a company. When the vehicle body is designed, only regions for assembly and movement about the leg support 1 are different, and other portion of the vehicle body are designed to remain consistent, so as to maximize a universality the other portion of the vehicle body for the high-end model vehicle and low-end model vehicle.

In the application, unless otherwise clearly specified and limited, a first feature being "above" or "under" a second feature may include the first and second features being in direct contact, or may include the first and second features not being in direct contact but being in contact through another feature there between. Moreover, a first feature is "above", "at a top of" and "on" a second feature includes the first feature being directly above and obliquely above the second feature, or simply means that the first feature is at a higher level than the second feature. A first feature being "below," "beneath," and "under" a second feature includes the first feature being directly below and obliquely below the second feature, or simply means that the first feature is at a smaller horizontal height than the second feature.

In the description of the application, it should be understood that the terms "center", "longitudinal", "lateral", "length", "width", "thickness", "up", "down", "front", "back", "left", "right", "vertical", "horizontal", "top", "bottom", "inside", "outside", "clockwise" and "counterclockwise" indicate orientations or positional relationships based on orientations or positional relationships shown in the accompanying drawings, and are only for the convenience of describing the application and simplifying the description, and do not indicate or imply that the referred device or element must have a specific orientation, be constructed and operated in a specific orientation, and therefore should not be understood as a limitation on the application.

It should be noted that all directional indications in the embodiments of the application are only configured to explain the relative position relationship, movement status and so on among the components in a certain specific posture. If the specific posture changes, the directional indication will also change accordingly.

In the application, unless otherwise clearly stipulated and limited, the terms "connected", "fixed" and so on should be understood in a broad sense. For example, "fixed" can be a fixed connection, a detachable connection, or an integral connection; it can be a mechanical connection or an electrical connection; it can be a direct connection or an indirect connection through an intermediate medium; it can be an internal connection of two elements or an interaction relationship between two elements, unless otherwise clearly limited. For those skilled in the art, the specific meanings of the above terms in this disclosure can be understood according to specific circumstances.

In addition, descriptions such as "first", "second" and so on in the application are only used for descriptive purposes and cannot be understood as indicating or implying relative importance thereof or implicitly indicating the number of the indicated technical features. Therefore, the features defined as "first" or "second" may explicitly or implicitly include one or more features. In the description of the application, "a plurality of" means two or more than two, unless otherwise clearly and specifically defined.

In the description of this specification, the description with reference to the terms "one embodiment", "some embodiments", "example", "specific example", or "some examples" and so on means that the specific features, structures, materials or characteristics described in conjunction with the embodiment or example are included in at least one embodiment or example of the application. In the specification, the exemplary expressions of the above terms do not necessarily refer to the same embodiment or example. Furthermore, the specific features, structures, materials, or characteristics described may be combined in any suitable manner in any one or more embodiments or examples. Furthermore, those skilled in the art may combine and couple different embodiments or examples described in this specification.

In addition, the technical solutions between the various embodiments can be combined with each other, but it must be based on the fact those skilled in the art can implement it. When the combination of technical solutions is contradictory or cannot be implemented, it should be deemed that such combination of technical solutions does not exist and is not within the scope sought by the application.

Although embodiments of the application have been shown and described, it will be appreciated by those skilled in the art that various changes, modifications, substitutions and alterations may be made to the embodiments without departing from the principles and spirit of the application, the scope of which is defined by the claims and equivalents thereof.

## Claims

1. A leg-support installation structure, **characterized by** comprising a crossbeam for supporting a seat, wherein the crossbeam is provided with a leg-support accommodation space for installing a leg support.

2. The leg-support installation structure according to claim 1, wherein the crossbeam is a rear-floor front crossbeam; and
the leg-support installation structure further comprises a leg-support bracing assembly that is configured to be fixedly connected to the leg support, fixedly connected to the rear-floor front crossbeam, and enclose the leg-support accommodation space with the rear-floor front crossbeam.

3. The leg-support installation structure according to claim 2, wherein the rear-floor front crossbeam comprises a rear-floor front-crossbeam upper plate assembly and a rear-floor front-crossbeam lower plate assembly, the rear-floor front-crossbeam upper plate assembly and the rear-floor front-crossbeam lower plate assembly being connected to form a rear-floor front crossbeam which has a cavity.

4. The leg-support installation structure according to claim 3, wherein the rear-floor front-crossbeam lower plate assembly comprises a rear-floor front-crossbeam first lower plate and a rear-floor front-crossbeam second lower plate which is connected to the rear-floor front-crossbeam first lower plate and is disposed in an L shape.

5. The leg-support installation structure according to claim 3 or 4, wherein the leg-support bracing assembly comprises:
a rear floor, hollowed out at a position where the leg supports is disposed;
a leg-support bracing plate, installed at a hollowed-out position of the rear floor and relatively fixedly connected to the rear floor; and
a leg-support installation plate, connected to the leg-support bracing plate and configured to be connected to a frame of the leg support.

6. The leg-support installation structure according to claim 5, wherein the leg-support bracing plate comprises a rear inclined surface, an upper top surface and a front inclined surface which are connected in sequence, the front inclined surface and the rear inclined surface being provided with reinforcement ribs, the upper top surface being disposed with an anti-interference slot;
the leg-support bracing assembly further comprises a rear-floor first patch plate which is located at a lower side of the leg-support bracing plate, a rear-floor second patch plate and a leg-support bracing-plate side blocking plate which are located at left and right sides of the leg-support bracing plate, respectively, and a leg-support bracing-plate front blocking plate located at a front side of the leg-support bracing plate; and
the leg-support bracing plate, the rear-floor first patch plate, the rear-floor second patch plate, the leg-support bracing-plate side blocking plate and the leg-support bracing-plate front blocking plate form a closed cavity for installing a sound-absorbing cotton.

7. The leg-support installation structure according to claim 3 or 4, further comprising a rear-floor assembly fixedly connected to both the rear-floor front crossbeam and the leg-support bracing assembly;
wherein, the leg-support bracing assembly is disposed at an end along an axial direction of the rear-floor front crossbeam, and the leg-support bracing assembly which is disposed above the rear-floor assembly and the rear-floor assembly enclose the leg-support accommodation space.

8. The leg-support installation structure according to claim 7, wherein the leg-support bracing assembly comprises:
a leg-support cover plate, arranged in an overturned basin shape and configured to enclose the leg-support accommodation space with the rear-floor assembly; and
a leg-support installation plate, fixedly connected to a top portion of the leg-support cover plate and is provided with a mounting hole for connecting to the leg support, the leg-support cover plate being provided with a mounting point at a preset position corresponding to the mounting hole.

9. The leg-support installation structure according to claim 8, wherein a transverse cross-section of the leg-support installation plate is a U-shaped structure and comprises two side flangings, a leg-support installation beam disposed between the two side flangings being laterally limited by the two side flangings;
a U-shaped opening is opened at an end in a longitudinal direction of the leg-support installation plate for guiding, when the leg support moves into the leg-support accommodation space, a pre-hook of the leg-support installation beam to move until the pre-hook is hung on the leg-support installation plate, such that the mounting hole is aligned with the mounting point of the leg-support cover plate.

10. The leg-support installation structure according to claim 9, wherein the leg-support bracing assembly further comprises a leg-support reinforcement beam fixedly disposed at a side of the leg-support cover plate which is away from the leg-support accommodation space, the leg-support installation plate being fixedly disposed at a side of the leg-support cover plate which faces the leg-support accommodation space; and
the leg-support reinforcement beam is provided with a leg-support installation positioning indication boss which is configured to push a fixing point of the leg support in a region between the two side flangings of the leg-support installation plate along the leg-support installation positioning indication boss; and the leg-support reinforcement beam is provided with a leg-support pre-hanging visual hole through which whether the pre-hook is hung on the leg-support installation plate or not can be observed.

11. The leg-support installation structure according to any one of claims 7 to 10, wherein the rear-floor assembly comprises:
a rear floor, hollowed out at a region where the leg-support accommodation space is located;
a rear-floor first patch plate, fixedly connected to the rear floor and a portion of which is lower than the rear floor, the rear-floor first patch plate and the leg-support bracing assembly enclosing the leg-support accommodation space; and
a rear-floor second patch plate, arranged vertically, and a lower edge of which is fixedly connected to the rear-floor first patch plate, and an upper edge of which is fixedly connected to the rear floor.

12. The leg-support installation structure according to claim 3, further comprising a rear floor, a portion of which corresponding to the leg-support accommodation space is disposed to concave downward; and the leg-support bracing assembly is fixedly connected to the rear floor, and the rear-floor front crossbeam is fixedly connected to a front end of the rear floor;
the rear-floor front crossbeam and the leg-support bracing assembly are disposed side by side in a direction that is vertical to an axial direction of the rear-floor front crossbeam; two ends of the leg-support bracing assembly and two ends of the rear-floor front crossbeam each are configured to be fixedly connected to left and right rear longitudinal beams of a vehicle body.

13. The leg-support installation structure according to claim 12, wherein the rear-floor front-crossbeam upper plate is disposed to avoid the leg-support accommodation space and is fixedly connected to the leg-support bracing assembly;
a transverse cross section of the rear-floor front-crossbeam upper plate is in an L-shape and the rear-floor front-crossbeam upper plate comprises a top portion and a vertical portion, the top portion being located above the leg-support bracing assembly, being fixedly connected to the leg-support bracing assembly, and being spaced apart from the rear-floor front-crossbeam lower plate, and the vertical portion being fixedly connected to a side of the rear-floor front-crossbeam lower plate; and
a plurality of welding clamp through holes are opened at the top portion for a welding clamp to pass through when the leg-support bracing assembly is welded to the rear floor.

14. The leg-support installation structure according to claim 12, wherein two ends of the rear-floor front-crossbeam lower plate are configured to be fixedly connected to the left and right rear longitudinal beams of the vehicle body; and the rear-floor front-crossbeam lower plate comprises a portion with leg-support which faces the leg-support accommodation space and a portion without leg-support except the portion with leg-support, an upper edge of the portion with leg-support being lower than an upper edge of the portion without leg-support.

15. The leg-support installation structure according to any one of claims 12 to 14, wherein the leg-support bracing assembly comprises:
a leg-support reinforcement beam, respectively fixedly connected to the rear floor and the rear-floor front crossbeam; and wherein a bottom of the leg-support reinforcement beam is open, and a lower edge of the leg-support reinforcement beam is placed at the rear floor and a portion of the lower edge is placed in a concaved portion of the rear floor; and a front side of the leg-support reinforcement beam is provided with an avoidance hole to provide a space for a movement of a motor for the leg support when the leg support is assembled and used;
a leg-support reinforcement-beam left blocking plate and a leg-support reinforcement-beam right blocking plate, respectively fixedly connected to two ends in a length direction of the leg-support reinforcement beam to block openings at the two ends in the length direction of the leg-support reinforcement beam;
a leg-support installation plate, fixedly connected to the leg-support reinforcement beam and provided with a mounting hole for connecting to the leg support; and
a leg-support reinforcement-beam front blocking plate, fixedly connected to the leg-support reinforcement beam to block the avoidance hole to form a concave avoidance groove which provides a space for the movement of the motor for the leg support when the leg support is assembled and used.

16. The leg-support installation structure according to claim 2, further comprising a rear floor, a hollowed-out region being disposed at an outer side of a front end of the rear floor;
the leg-support bracing assembly is located above the hollowed-out region of the rear floor and is fixedly connected to the rear floor;
the rear-floor front crossbeam is fixedly connected to a front end of the rear floor; two ends of the rear-floor front crossbeam are configured to be fixedly connected to left and right rear longitudinal beams of a vehicle body; the rear-floor front crossbeam comprises a portion with leg-support which corresponds to the hollowed-out region of the rear floor and is disposed to concave downward to avoid the leg support.

17. The leg-support installation structure according to claim 16, wherein the rear-floor front crossbeam is a rear-floor front-crossbeam upper plate assembly which comprises the portion with leg-support and the portion without leg-support connected to the portion with leg-support; and an upper edge of the portion with leg-support is lower than an upper edge of the portion without leg-support, and an end of the portion with leg-support and an end of the portion without leg-support that are away from each other are fixedly connected to the left and right rear longitudinal beams of the vehicle body respectively.

18. The leg-support installation structure according to claim 16 or 17 further comprises a rear-floor middle-crossbeam assembly which traverses beneath the rear floor and is configured to be fixedly connected to the left and right rear longitudinal beams of the vehicle body; the rear-floor middle-crossbeam assembly, the rear floor and the leg-support bracing assembly forming a reinforcement crossbeam which has a closed cavity.

19. The leg-support installation structure according to claim 18, wherein the rear-floor middle-crossbeam assembly comprises:
a rear-floor middle crossbeam, which traverses beneath the rear floor; two ends of the rear-floor middle crossbeam are fixedly connected to the left and right rear longitudinal beams of the vehicle body; the rear-floor middle crossbeam, the rear floor and the leg-support bracing assembly form a reinforcement crossbeam which has a closed cavity; and a front inclined surface of the rear-floor middle crossbeam is provided with an avoidance hole which is configured to provide a space for a movement of a motor for the leg support when the leg support is assembled and used;
the rear-floor middle-crossbeam assembly further comprises a blocking plate which is fixedly connected to the rear-floor middle crossbeam and blocks the avoidance hole; the blocking plate is formed with a concave avoidance groove for providing the space for the movement of the motor for the leg support when the leg support is assembled and used.

20. The leg-support installation structure according to any one of claims 2, 16, and 17, wherein the leg-support bracing assembly comprises a reinforcement plate and a leg-support installation plate mounted at the reinforcement plate, the reinforcement plate being located above the hollowed-out region of the rear floor and being fixedly connected to the rear floor, two leg-support installation plates being configured to be fixedly connected to the leg support.

21. A vehicle, **characterized by** comprising the leg support and the leg-support installation structure according to any one of claims 1 to 20, wherein the leg support is connected to the leg-support installation structure, and the leg support, when in a stowed state, is located in the leg-support accommodation space and does not protrude from the crossbeam;
or the vehicle comprises a profiling member and the leg-support installation structure according to any one of claims 1 to 20, wherein the profiling member is installed in the leg-support accommodation space.
